# EUROPÄISCHE PATENTSCHRIFT

(11) **EP 0 756 136 B1**
(45) Veröffentlichungstag und Bekanntmachung des Hinweises auf die Patenterteilung: **31.01.2001**
(21) Anmeldenummer: 96108003.3
(22) Anmeldetag: 20.05.1996
(51) Int. Cl.: F24C 15/16, F24C 15/08, F24C 15/00

(54) **Gargutträger für einen Backofen**
Food support for baking oven
Support d'alimentation pour four de cuisson

(30) Priorität: 26.07.1995 DE 19527360
(43) Veröffentlichungstag der Anmeldung: 29.01.1997
(73) Patentinhaber: BSH Bosch und Siemens Hausgeräte GmbH, 81669 München (DE)
(72) Erfinder: Klement, Johann, 83374 Traunwalchen (DE)

(56) Entgegenhaltungen:
- DE-A- 2 526 096
- DE-A- 3 028 271
- US-A- 3 580 733
- US-A- 3 748 171
- US-A- 3 988 514
- US-A- 4 222 774
- US-A- 4 881 519
- PATENT ABSTRACTS OF JAPAN vol. 7, no. 112 (M-215), 17.Mai 1983 & JP-A-58 033031 (HITACHI NETSUKIGU KK), 26.Februar 1983,

## Beschreibung

Die vorliegende Erfindung betrifft einen Gargutträger nach dem Oberbegriff des Anspruchs 1.

Ein derartiger Gargutträger ist bekannt aus der US 4,881,519, wobei der Gargutträger eine durch Hartanodisierung erzeugte Aluminiumoxidschicht aufweist.

Weiterhin ist aus der Druckschrift US-A-4,222,774 bekannt, den Grundkörper eines Gargutträgers aus Aluminiumlegierung zu bilden. Weiterhin ist aus dem PATENT ABSTRACTS OF JAPAN, vol. 7, No. 112 (M-215), aluminiumplatierter Stahl zur Steigerung der Korrosionsbeständigkeit für einen Dampfgarofen bekannt. Aus der Druckschrift DE-OS-25 26 096 ist bekannt, daß zur Reparatur von Schadstellen der Innenflächen von pyrolytisch selbstreinigenden Back- und Bratrohren auf die Schadstellen ein Aluminium-Email aufgetragen und eingebrannt wird.

Ein weiterer Gargutträger ist bekannt aus der DE-GM 87 03 646.0, wobei die aus dem verhältnismäßig weichen Material Aluminium erstellte Seele bzw. Grundkörper des Backbleches durch einen Überzug oder durch eine Abdeckung aus dem verhältnismäßig harten und korrossionsbeständigen Material Edelstahl vollständig und beidseitig verkleidet ist. Nachteilig dabei ist das unzureichende Verkratz-Verhalten von Edelstahl und dessen schlechte Wärmeleitung. Um das Backgut gleichmäßig von unten zu erwärmen, muß die Wärme erst von unten durch das Edelstahlmaterial an der Unterseite des Backbleches gelangen, um dann in der Aluminiumseele mit Hilfe deren optimaler Wärmequerleitung gleichmäßig verteilt zu werden. Anschließend muß die Wärme nochmals durch den schlechten Wärmeleiter Edelstahl an der Oberseite des Backbleches zum Backgut nach oben wandern.

Weiterhin sind Backbleche bekannt, die vollständig aus Aluminium bestehen. Diese sind zwar bezüglich der Wärmeverteilung sehr günstig, besitzen jedoch insbesondere durch ihre Anfälligkeit für Verwindungen und Verkratzung Nachteile.

Bekannt sind auch Backbleche, deren Seele aus einem Stahlblech besteht, welches emailliert ist. Nachteilig dabei ist die schlechte Wärmeleitung sowohl von Stahl als auch von Email. Dies hat zur Folge, daß bei der Verwendung von emaillierten Stahlblechen wenig befriedigende Backergebnisse erzielt werden. Zudem neigen Stahlbackbleche wegen erhöhter Spannungen infolge des Umformvorganges vom ebenen Blech zum Backblech zum Verzug.

Weiterhin sind kunststoffbeschichtete Backbleche bekannt. Bei diesen treten neben den für Aluminium- bzw. Stahlbackblechen typischen Problemen zusätzlich Temperatur- und Recyclingprobleme bezüglich des Kunststoffes auf.

Aufgabe der vorliegenden Erfindung ist es deshalb, einen Gargutträger bereitzustellen, mit dem gute Backergebnisse bei einer über die Gebrauchsdauer ansprechenden optischen Oberfläche gewährleistet sind.

Dies ist erfindungsgemäß bei einem Gargutträger mit den Merkmalen des Patentanspruchs 1 erreicht. Dadurch ist gleichzeitig eine gute Wärmeleitung und eine kratzfeste, homogene Backfläche erreicht. Zugleich neigt die Kombination dieser beiden Materialien weniger zum Verzug beim Backen, wodurch eine ebene Backfläche bereitgestellt ist, was das Backergebnis positiv beeinflußt. Um die Neigung zum Verzug des emaillierten Backbleches weiter zu reduzieren, ist die Unterseite des Grundkörpers zumindest zum Teil mit einer weiteren Schutzschicht aus Aluminium-Email bedeckt. Dies stabilisiert das Backblech. Die Wärme kann an den Flächenbereichen der Unterseite des Grundkörpers, die ohne Emailschutzschicht sind, direkt in den Grundkörper gelangen und in diesem flächenmäßig verteilt werden. Um dieses Verteilungsverhalten nicht nachteilig zu beeinflussen, ist es günstig, die nicht emaillierten Flächenbereiche der Unterseite des Grundkörpers gleichmäßig über den Grundkörper zu verteilen.

Bevorzugt besteht der Grundkörper aus einer Aluminium-Legierung mit im Vergleich zu Reinaluminium erhöhter Zugfestigkeit. Dadurch ist ein gleichmäßigeres Umformverhalten mit im Vergleich zum Reinaluminium verringerten Eigenspannungen des Backblechs erreicht, wodurch ein Verziehen des Backblechs während des Backvorgangs weiter verringert ist. Dies ist insbesondere bei der Verwendung von Backblechen in Backöfen mit Backwagen wegen der einseitigen Einhängung der Backbleche von Bedeutung. Als besonders günstig bezüglich des Umformverhaltens und des nachfolgenden Emailliervorganges haben sich Aluminium-Magnesium-Legierungen erwiesen. Möglich ist auch der Einsatz von Aluminium-Mangan-Silizium-Legierungen.

Alternativ kann der Grundkörper auch aus aluminiumplattiertem Stahl bestehen, der wiederum mit Aluminium-Email beschichtet ist.

Gemäß einer bevorzugten Ausführungsform weist die Schutzschicht aus Aluminium-Email eine Stärke von etwa 50 bis 200 pm auf. Die Stärke ist dabei auf das Haftvermögen des Emails und die Oberflächenbeschaffenheit des Aluminiums abzustimmen. Das Email soll einerseits sicher auf dem Untergrund haften und andererseits soll aus Kostengründen nicht unnötig viel Aluminium-Email verwendet werden.

Vorteilhafterweise ist die Unterseite des Grundkörpers zu höchstens 50% ihrer Fläche mit der weiteren Schutzschicht bedeckt, um die guten Wärmeleitungseigenschaften des Aluminiums für den Backvorgang nutzen zu können. Die Stärke der weiteren Schutzschicht an der Unterseite beträgt aus den obengenannten Gründen ebenfalls etwa 50 bis 200 um. Um gegebenenfalls das Backblech in eine bevorzugte Richtung vorspannen zu können, sind die Stärken der Schutzschichten an der Ober- und Unterseite des Grundkörpers unterschiedlich groß gewählt.

Nachfolgend sind anhand schematischer Darstellungen zwei Ausführungsbeispiele der erfindungsgemäßen Gargutträgers beschrieben. Es zeigt.
- Fig. 1: in einer stark vereinfachten Querschnittdarstellung ein Backblech gemäß dem ersten Ausführungsbeispiel im wesentlichen entlang der Linie I-I in Fig.3;
- Fig.2: in stark vergrößertem Maßstab einen Abschnitt aus Fig.1;
- Fig.3: eine Ansicht des Backblechs gemäß dem ersten Ausführungsbeispiel von unten;
- Fig.4: in einer stark vereinfachten Querschnittdarstellung ein Backblech gemäß dem zweiten Ausführungsbeispiel im wesentlichen entlang der Linie IVIV in Fig. 5 und
- Fig.5: eine Ansicht des Backblechs gemäß dem zweiten Ausführungsbeispiel von unten.

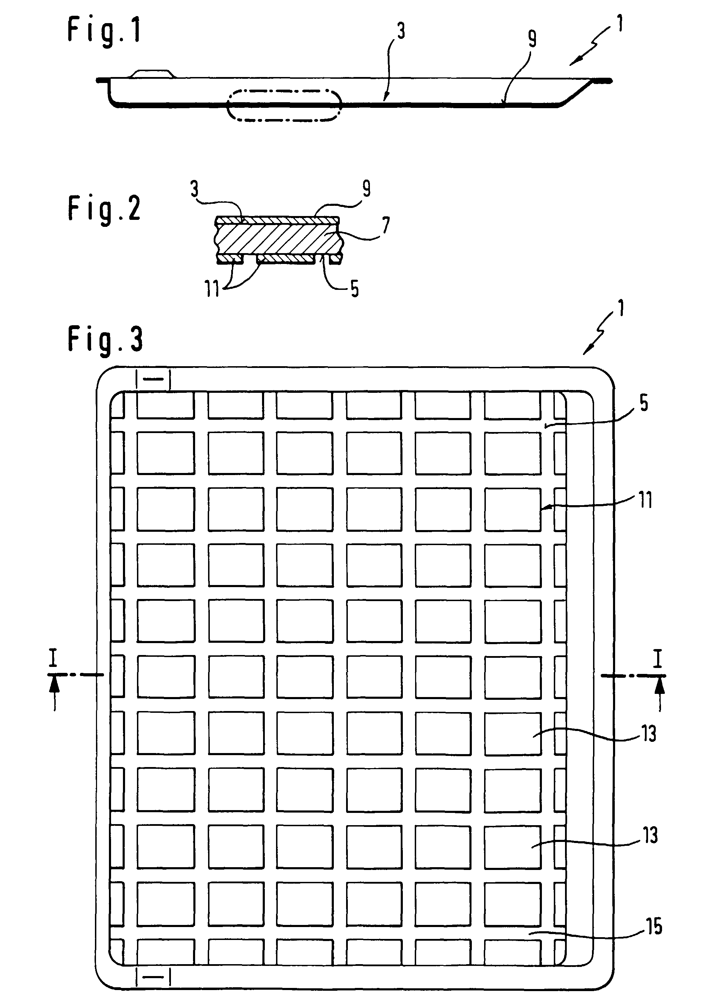

Die Figuren 1 bis 3 zeigen ein erstes Ausführungsbeispiel eines Backbleches 1 mit einer Oberseite 3, die zugleich als Backfläche dient, und einer Unterseite 5. Dabei besteht das Backblech 1 im wesentlichen aus drei Schichten, nämlich einem Grundkörper 7 aus einer Aluminium-Magnesium-Legierung, einer auf dessen Oberseite 3 aufgebrachten AluminiumEmailschicht 9 und einer auf dessen Unterseite 5 aufgebrachten weiteren Aluminium-Emailschicht 11 (Fig.2). Während die Schutzschicht bzw. Aluminium-Emailschicht 9 den Grundkörper 7 vollständig bedeckt, ist die weitere Schutzschicht 11 unterbrochen ausgebildet. Dadurch gebildete SchutzschichtTeilflächen 13 sind gleichmäßig über die Unterseite 5 des Grundkörpers 7 verteilt, wobei sie weniger als die Hälfte der Gesamtfläche der Unterseite 5 des Grundkörpers 7 bedekken. Zwischen den Schutzschicht-Teilflächen 13 gebildete Freiflächen 15 bilden Wärmezugangsfenster zu dem Grundkörper 7 des Backblechs 1.

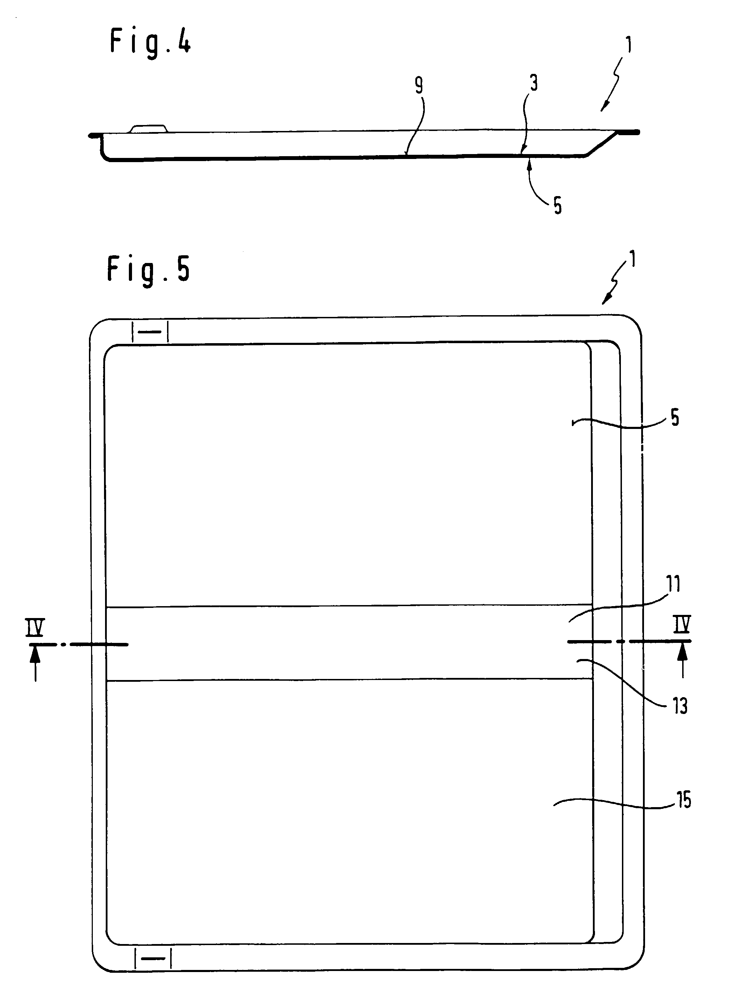

Bei dem zweiten in den Figuren 4 und 5 gezeigten Ausführungsbeispiel werden wegen den geringfügigen Abweichungen zu dem ersten Ausführungsbeispiel ohne Gefährdung der Klarheit dieselben Bezugszeichen verwendet. Im Unterschied zu dem ersten Ausführungsbeispiel ist im zweiten Ausführungsbeispiel die Schutzschicht-Teilfläche 13 lediglich als Querstreifen ausgebildet und in ihrer Fläche deutlich reduziert. Dementsprechend besteht die Unterseite 5 des Backbleches 1 fast vollständig aus Freiflächen 15.

Selbstverständlich sind auch andere Geometrien und Anordnungen der Schutzschicht-Teilflächen 13 gemäß der vorliegenden Erfindung möglich.

## Patentansprüche

1. Gargutträger, insbesondere Backblech, für einen Backofen, wobei der Gargutträger einen Aluminium aufweisenden Grundkörper und auf dessen Oberseite eine diese vollständig bedeckende Schutzschicht aus Aluminium-Email aufweist, **dadurch gekennzeichnet,** daß die Unterseite (5) des Grundkörpers (7) zumindest zum Teil mit einer weiteren Schutzschicht (11) aus Aluminium-Email bedeckt ist, und daß Flächenbereiche (15) der Unterseite des Grundkörpers (7), die ohne die weitere Schutzschicht (11) sind, gleichmäßig über den Grundkörper (7) verteilt sind.

2. Gargutträger nach Anspruch 1, **dadurch gekennzeichnet,** daß der Grundkörper (7) aus einer Aluminiumlegierung mit im Vergleich zu Reinaluminium erhöhter Zugfestigkeit besteht.

3. Gargutträger nach Anspruch 2 **dadurch gekennzeichnet,** daß die Aluminiumlegierung Magnesium enthält.

4. Gargutträger nach Anspruch 1, **dadurch gekennzeichnet,** daß der Grundkörper aus aluminiumplattiertem Stahl besteht.

5. Gargutträger nach einem der vorhergehenden Ansprüche, **dadurch gekennzeichnet,** daß die Schutzschicht (9) eine Stärke von etwa 50 bis 200 µm aufweist.

6. Gargutträger nach einem der vorhergehenden Ansprüche , **dadurch gekennzeichnet,** daß die Unterseite des Grundkörpers (7) zu höchstens 50 % ihrer Fläche mit der weiteren Schutzschicht (11) bedeckt ist.

7. Gargutträger nach Anspruch 6 **dadurch gekennzeichnet,** daß die Stärke der weiteren Schutzschicht (11) an der Unterseite (5) etwa 50 bis 200 µm beträgt.

8. Gargutträger nach einem der vorhergehenden Ansprüche, **dadurch gekennzeichnet,** daß die Stärken der Schutzschichten (9, 11) an der Ober- und Unterseite des Grundkörpers (7) unterschiedlich sind.

## Claims

1. Support for stock to be cooked, especially a baking tray, for a baking oven, wherein the cooking stock support comprises a base body, which comprises aluminium, and on the upper side thereof a protective coating of aluminium enamel which completely covers this, characterised in that the underside (5) of the base body (7) is covered at least in part by a further protective coating (11) of aluminium enamel and that area regions (15) of the underside of the base body (7), which are without the further protective coating (11), are distributed uniformly over the base body (7).

2. Support for stock to be cooked according to claim 1, characterised in that the base body (7) consists of an aluminium alloy with increased tensile strength compared with pure aluminium.

3. Support for stock to be cooked according to claim 2, characterised in that the aluminium alloy contains magnesium.

4. Support for stock to be cooked according to claim 1, characterised in that the base body consists of aluminium-plated steel.

5. Support for stock to be cooked according to one of the preceding claims, characterised in that the protective coating (9) has a thickness of approximately 50 to 200 microns.

6. Support for stock to be cooked according to one of the preceding claims, characterised in that the underside of the base body (7) is covered with the further protective coating (11) to at most 50% of its area.

7. Support for stock to be cooked according to claim 6, characterised in that the thickness of the further protective coating (11) at the underside (5) amounts to approximately 50 to 200 microns.

8. Support for stock to be cooked according to one of the preceding claims, characterised in that the thicknesses of the protective coatings (9, 11) at the upper side and underside of the base body (7) are different.

## Revendications

1. Support pour aliments à cuire, en particulier plaque de cuisson, pour un four de cuisson, le support pour aliments à cuire présentant un corps de base comprenant de l'aluminium et dont le côté supérieur est complètement recouvert par une couche de protection en émail d'aluminium, caractérisé en ce que le côté inférieur (5) du corps de base (7) est recouvert au moins en partie par une couche supplémentaire de protection (11) en émail d'aluminium, et en ce que des zones (15) de la surface du côté inférieur du corps de base (7) qui ne présentent pas la couche supplémentaire de protection (11) sont réparties uniformément sur le corps de base (7).

2. Support pour aliments à cuire selon la revendication 1, caractérisé en ce que le corps de base (7) est constitué d'un alliage d'aluminium dont la résistance en traction est supérieure à celle de l'aluminium pur.

3. Support pour aliments à cuire selon la revendication 2, caractérisé en ce que l'alliage d'aluminium contient du magnésium.

4. Support pour aliments à cuire selon la revendication 1, caractérisé en ce que le corps de base est constitué d'acier plaqué d'aluminium.

5. Support pour aliments à cuire selon l'une des revendications précédentes, caractérisé en ce que la couche de protection (9) présente une épaisseur d'environ 50 à 200 µm.

6. Support pour aliments à cuire selon l'une des revendications précédentes, caractérisé en ce que le côté inférieur du corps de base (7) est recouvert par la couche supplémentaire de protection (11) sur au plus 50 % de sa surface.

7. Support pour aliments à cuire selon la revendication 6, caractérisé en ce que sur le côté inférieur (5), l'épaisseur de la couche supplémentaire de protection (11) se monte à environ 50 à 200 µm.

8. Support pour aliments à cuire selon l'une des revendications précédentes, caractérisé en ce que les couches de protection (9, 11) prévues sur le côté supérieur et sur le côté inférieur du corps de base (7) présentent des épaisseurs différentes.
